Europäisches Patentamt

European Patent Office

Office européen des brevets

(11) Publication number: **0 048 575**
**B1**

## (12) EUROPEAN PATENT SPECIFICATION

(45) Date of publication of patent specification: **14.08.85**

(21) Application number: **81304171.2**

(22) Date of filing: **11.09.81**

(51) Int. Cl.⁴: **G 02 B 6/44,** H 04 B 3/56

(54) Overhead electric and optical transmission system.

(30) Priority: **15.09.80 GB 8029943**

(43) Date of publication of application:
**31.03.82 Bulletin 82/13**

(45) Publication of the grant of the patent:
**14.08.85 Bulletin 85/33**

(84) Designated Contracting States:
**AT BE DE FR IT NL SE**

(56) References cited:
**DE-A-2 716 922**
**FR-A-2 390 816**
**US-A-3 363 174**
**US-A-3 485 940**

(73) Proprietor: **BICC Public Limited Company
21, Bloomsbury Street
London, WC1B 3QN (GB)**

(72) Inventor: **Dey, Philip
24 Hill Side
New Barnet Hertfordshire EN5 1LU (GB)**
Inventor: **Plessner, Karl Wolfgang
Little Winch Chipperfield
King's Langley Hertfordshire (GB)**

(74) Representative: **Ross Gower, Edward Lewis
et al
BICC plc Patents Department 38 Wood Lane
London W12 7DX (GB)**

Courier Press, Leamington Spa, England.

## Description

This invention relates to overhead electric and optical transmission systems of the kind in which one or more than one bare overhead electric conductor is freely supported in long lengths between spaced pylons, towers, masts or other supports, and in which the overhead electric conductor, or at least one of the overhead electric conductors, includes at least one optical guide for the transmission of the ultra-violet, visible and infra-red regions of the electromagnetic spectrum, which regions, for convenience, hereinafter will all be included in the generic term "light".

One form of bare overhead electric conductor including at least one optical guide for use in the communications field adapted for transmission of light having a wavelength within the range 0.8 to 1.3 micrometres, is described and claimed in the Specification of FR—A—2 390 816 and comprises at least one layer of helically wound bare elongate elements of metal or metal alloy, at least one compartment within and extending throughout the length of the overhead conductor and, loosely housed in the elongate compartment or in at least one of the elongate compartments, at least one separate optical fibre and/or at least one optical bundle.

By the expression "optical bundle" is meant a group of optical fibres or a group of fibres including at least one optical fibre and at least one non-optical reinforcing fibre or other reinforcing elongate member. Each optical fibre of the optical bundle may be used independently as a separate light guide, each with its own modulated light source and detector, or a plurality of optical fibres of a bundle may be used together as a single light guide, with a single light source.

It will be appreciated that, in an overhead electric and optical transmission system of the aforesaid kind in which the overhead electric conductor, or at least one of the overhead electric conductors, includes at least one optical guide for the transmission of light, it is necessary at spaced positions along the overhead electric and optical transmission system to effect a joint between the optical guides of two overhead electric conductors suspended from a tower or other support or to effect a joint between the optical guide of an overhead electric conductor suspended from a tower or other support and an optical guide of a cable extending to a sub-station or other location.

According to the present invention we provide an overhead electric and optical transmission system of the kind in which one or more than one overhead electric conductor, which includes one or more than one optical guide comprising at least one optical fibre for the transmission of light, is freely supported in long lengths between spaced towers or other supports, which transmission system includes an optical guide joint and is characterised in that each optical guide connected at the joint passes into a housing through one of two end walls of the housing, at least that part of the housing extending between its end walls being of electrically insulating material, and in that the housing is mounted above the ground on the tower or other support, accommodates the optical fibre joint or joints and is at least partially filled with an electrically insulating medium in a fluid or semi-fluid state to an extent sufficient to surround the optical fibre joint or joints, each optical guide effecting a substantially fluid-tight seal with the end wall of the housing or entering the housing through a tube whose entry end is directed downwardly in such a way that risk of water or other liquid entering the housing is substantially eliminated.

The optical guides connected at the joint may be optical guides of two overhead electric conductors suspended from a tower or other support, or one of the optical guides may be an optical guide of an overhead electric conductor suspended from a tower or other support and the other of the optical guides may be an optical guide of a cable extending to a sub-station or other location.

Preferably, where one or each optical guide connected at the joint is a component part of a live overhead electric conductor, the wall of the housing through which the optical guide or guides passes or pass is of electrically conductive metal or metal alloy and, preferably also, the internal surface of the housing in at least the vicinity of said wall carries a layer of electrically conductive metal or metal alloy so as to reduce electric stress concentration in that part of the housing. To eliminate risk that rain water or other liquid will enter the housing where the optical guide of an overhead electric conductor passes through the wall of the housing, preferably the optical guide enters the housing through a preformed tube of metal or metal alloy, one end of which passes through and effects a substantially fluid-tight seal with said wall of the housing and which is of such a shape that the other end of the tube is directed downwardly; the overhead electric conductor may itself pass through the preformed tube into the housing or the overhead electric conductor may be cut back and the exposed length of optical guide may pass through the preformed tube into the housing. The end of the tube sealed in the wall of the housing may protrude into the housing and may be so shaped as to form a stress cone.

Preferably, the housing is of substantially elongate form and is preferably so mounted that its longitudinal axis is vertical or approximately vertical. Where the optical guides connected at the joint are optical guides of two overhead electric conductors, preferably the optical guides enter the housing side by side through the upper end wall of the housing. Where one of the optical guides connected at the joint is the optical guide of a cable extending to a sub-station or other location, this optical guide preferably passes into the housing through the bottom end wall of the housing. In this case, preferably the bottom end wall of the housing is of electrically conductive metal or metal alloy and is earthed. The circumferentially extending wall of the housing is preferably of porcelain or other electrically insulating material and may be provided at spaced positions along its length with outwardly extending circumferential sheds.

The electrically insulating medium contained in the housing preferably comprises a grease-like material, such as a petroleum-based insulating grease, a mineral insulating oil, such as an oil used in transformers and oil-filled electric cables, a silicone oil or compound, or an insulating gas, e.g. SF 6. Where the electrically insulating medium is a mineral insulating oil, a silicone oil or compound or an insulating gas, each optical guide may effect a substantially fluid-tight seal with a wall of the housing and the oil or gas may be maintained at a positive pressure by a known device. The or each optical fibre joint may be suspended within the housing and, in this case, abutting ends of optical fibres are preferably jointed by a fusion technique. Alternatively, the or each optical fibre joint may be rigidly supported within the housing and, in this case, abutting ends of optical fibres may be either jointed by a fusion technique or held in abutting relationship by mechanical means.

In addition to the optical fibre joint or joints, the housing of the optical guide joint may also accommodate regenerators and/or other ancillary equipment associated with the optical communication system.

The invention is further illustrated, by way of example, by the following description with reference to drawings, in which:—

Figure 1 is a diagrammatic side view of a tower of an overhead electric and optical transmission system showing mounted on the tower, the housings of three optical guide joints between overhead electric conductors suspended from the tower;

Figure 2 is a diagrammatic sectional side view of a preferred optical guide joint between optical guides of two overhead electric conductors suspended from the tower shown in Figure 1, and

Figure 3 is a diagrammatic side view of a preferred optical guide joint between an optical guide of a live overhead electric conductor suspended from a tower and the optical guide of an optical cable extending to a sub-station.

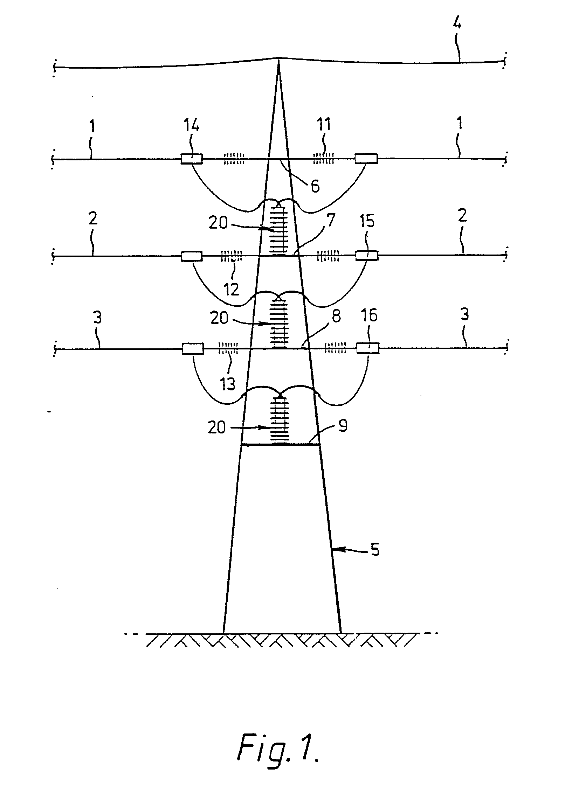

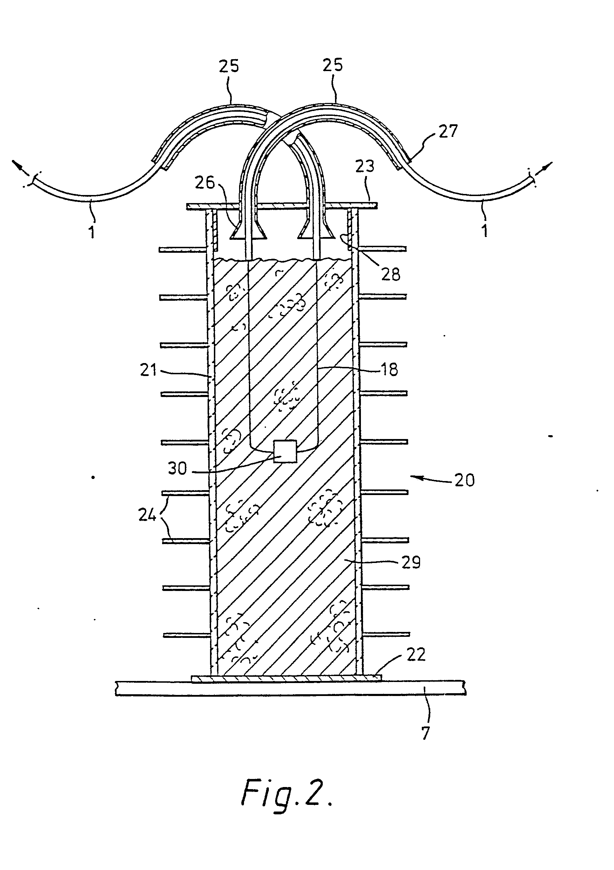

Referring to Figures 1 and 2, the overhead electric and optical transmission system comprises three phase conductors 1, 2 and 3 and an earth conductor 4 freely supported in long lengths between towers 5 at spaced positions along the system. Each phase conductor 1, 2 and 3 has a central bore extending throughout its length in which is loosely housed an optical guide 18 comprising an elongate plastics body having a bore in which is loosely housed an optical fibre. Phase conductors 1 on opposite sides of a tower 5 are freely suspended from a cross-arm 6 on the tower by insulator strings 11 which are connected to the conductors by conventional wedge-type fittings 14; phase conductors 2 on opposite sides of the tower are freely suspended from a cross-arm 7 by insulator strings 12 connected to the conductors by wedge-type fittings 15; and phase conductors 3 on opposite sides of the tower are freely supported from a cross-arm 8 by insulator strings 13 connected to the conductors by wedge-type fittings 16. Electrical connection between phase conductors 1, 2 and 3 on opposite sides of the tower 5 is effected by conventional jumper cables (not shown). From each wedge-type fitting 14, 15 and 16, the phase conductors 1, 2 and 3 each passes through a tubular metal swan neck 25 into a housing 21 where the optical guide joint 20 is effected. The housing 21 of the optical guide joint 20 between the optical guides 18 of the conductors 1 is supported on the cross-arm 7; the housing 21 of the optical guide joint 20 between the optical guides 18 of the conductors 2 is supported on the cross-arm 8; and the housing 21 of the optical guide joint 20 between the optical guides 18 of the conductors 3 is supported on an auxiliary cross-arm 9. Detail of the optical guide joint 20 between the optical guides 18 of the conductors 1 will now be described with reference to Figure 2.

The optical guide joint 20 comprises a cylindrical tubular housing 21 of porcelain which is mounted on the cross-arm 7 with its axis substantially vertical and which is closed at its lowermost end by a metal end plate 22 and is closed at its uppermost end by a metal end cap 23. The circumferentially extending wall of the housing 21 has outwardly extending circumferential sheds 24 at spaced positions along its length. The metal end plate 22 is earthed. At diametrically spaced positions of the metal end cap 23, two tubular metal swan necks 25 protrude through the end cap into the interior of the housing 21, each swan neck effecting a substantially fluid-tight seal with the cap. The end of each swan neck 25 protruding into the housing 21 is shaped to form a stress cone 26; the other end 27 of each swan neck 25 is directed downwardly to eliminate risk of water or other liquid entering the housing 21 through the swan neck. The internal surface of the circumferentially extending wall of the housing 21 adjacent the metal end cap 23 carries a metal coating 28 to reduce electric stress concentration in that part of the housing. The part of each phase conductor 1 extending from the wedge-type fitting 14 passes through one of the swan necks 25 into the housing, each conductor being cut back at a position adjacent the stress cone 26 so that a length of optical guide 18 is suspended downwardly within the housing. An optical fibre joint 30 is effected between the optical fibres of the optical guides 18 by a fusion welding technique and is suspended within the housing 21. The interior of the housing is substantially filled with petroleum jelly 29.

The optical guide joints between the optical guides 18 of the conductors 2 and between the optical guides 18 of the conductors 3 are substantially identical to the optical guide joint shown in Figure 2.

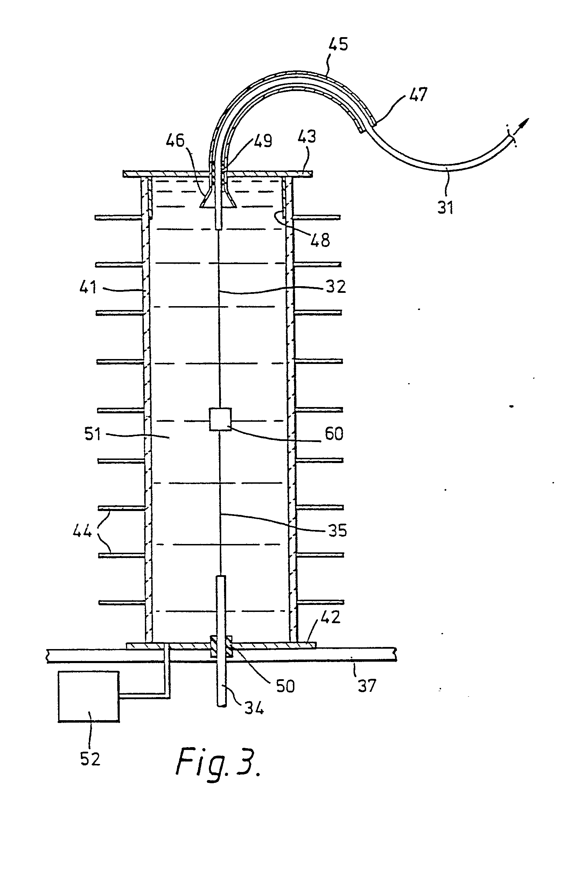

Figure 3 shows a diagrammatic side view of an optical guide joint between an optical guide 32 of an overhead phase conductor 31 suspended from a tower (not shown) and the optical guide 35 of an optical cable 34 extending to a sub-station (not shown). The optical guide joint comprises a cylindrical tubular housing 41 of porcelain which is mounted on a cross-arm 37 of the tower with its axis substantially vertical and which is closed at its lowermost end by a metal end plate 42 and at its uppermost end by a metal end cap 43. Outwardly extending circumferential sheds 44 are provided at spaced positions along the length of the circumferentially extending wall of the housing 41. Protruding through the metal end cap 43 into the housing 41 is a tubular metal swan neck 45 which effects a fluid-tight seal with the cap. At the end of the swan neck 45 protruding into the housing 41, the swan neck is shaped to form a stress cone 46; the other end 47 of the swan neck is directed downwardly to reduce risk that water will enter the housing. The internal surface of the circumferentially extending wall of the housing 41 adjacent the metal end cap 43 carries a metal coating 48. The phase conductor 31 passes through the swan neck 45 into the housing 41, a substantially fluid-tight seal 49 being effected between the conductor and the swan neck in the region of the metal end cap 43. The optical cable 34 passes through and effects a fluid-tight seal 50 with the metal end plate 42. Within the housing 41 the phase conductor 31 and the optical cable 34 are cut back and the exposed lengths of the optical guides 32 and 35 extend to an optical fibre joint 60 where the optical fibres of the optical guides are jointed end-to-end by a fusion welding technique. The housing 41 is filled with mineral insulating oil 51 which is maintained at a positive pressure by means of a pressure tank 52.

## Claims

1. An overhead electric and optical transmission system of the kind in which one or more than one overhead electric conductor (1, 2, 3), which includes one or more than one optical guide (18) comprising at least one optical fibre for the transmission of light, is freely supported in long lengths between spaced towers (5) or other supports, which transmission system includes an optical guide joint, characterised in that each optical guide (18) connected at the joint passes into a housing (21) through one of two end walls (22, 23) of the housing, at least that part of the housing extending between its end walls being of electrically insulating material, and in that the housing is mounted above the ground on the tower (5) or other support, accommodates the optical fibre joint (30) or joints and is at least partially filled with an electrically insulating medium in a fluid or semi-fluid state to an extent sufficient to surround the optical fibre joint or joints, each optical guide effecting a substantially fluid-tight seal with the end wall of the housing or entering the housing through a tube (25) whose entry end is directed downwardly, in such a way that risk of water or other liquid entering the housing is substantially eliminated.

2. An overhead electric and optical transmission system as claimed in Claim 1, characterised in that the optical guides connected at the joint are optical guides of two overhead electric conductors suspended from the tower or other support.

3. An overhead electric and optical transmission system as claimed in Claim 1, characterised in that one of the optical guides connected at the joint is an optical guide of an overhead electric conductor suspended from the tower or other support and the other of the optical guides connected at the joint is an optical guide of a cable (34) extending to a sub-station.

4. An overhead electric and optical transmission system as claimed in Claim 2 or 3, characterised in that the wall of the housing through which the optical guide or guides passes or pass into the housing is of electrically conductive metal or metal alloy.

5. An overhead electric and optical transmission system as claimed in Claim 4, characterised in that the tube (25) through which the or each optical guide enters the housing is of metal or metal alloy, the inner one of its ends being a fluid-tight seal in a hole in said metal wall of the housing.

6. An overhead electric and optical transmission system as claimed in any one of the preceding Claims, characterised in that the housing is of substantially elongate form and is so mounted that its longitudinal axis is vertical or approximately vertical.

7. An overhead electric and optical transmission system as claimed in Claim 6 in which the optical guides connected at the joint are optical guides of two overhead electric conductors, characterised in that the optical guides enter the housing side-by-side through the upper end wall of the housing.

8. An overhead electric and optical transmission system as claimed in Claim 7 in which one of the optical guides connected at the joint is the optical guide of a cable extending to a sub-station, characterised in that said one optical guide passes into the housing through the bottom end wall of the housing.

9. An overhead electric and optical transmission system as claimed in any one of the preceding Claims, characterised in that the or each optical fibre joint is suspended within the housing and abutting ends of optical fibres are jointed by a fusion welding technique.

10. An overhead electric and optical transmission system as claimed in any one of Claims 1 to 8, characterised in that the or each optical fibre joint is rigidly supported within the housing and ends of optical fibres are held in abutting relationship by mechanical means.

## Revendications

1. Système aérien de transmission électrique et optique du genre où un ou plusieurs conducteurs électriques aériens (1, 2, 3), qui comporte un ou plusieurs guides optiques (18) constitués d'au moins une fibre optique pour le transport de lumière, est supporté librement en grandes longueurs entre des pylônes (5) espacés ou d'autres supports, lequel système de transmission comporte une jonction de guides optiques, caractérisé en ce que chaque guide optique (18) connecté au niveau de la junction pénètre dans un boîtier (21) à travers une des deux parois extrêmes (22, 23) du boîtier, au moins la partie du boîtier s'étendant entre ses parois extrêmes étant en matière électriquement isolante, et en ce que le boîtier est monté au-dessus du sol sur le pylône (5) ou un autre support, contient la ou les jonctions (30) de fibres optiques et est au moins partiellement rempli d'un agent électriquement isolant à l'état fluide ou semi-fluide dans une mesure suffisante pour entourer la ou les jonctions de fibres optiques, chaque guide optique réalisant un joint très étanche aux fluides avec la paroi extrême du boîtier ou entrant dans le boîtier à travers un conduit (25) dont l'extrémité d'entrée est dirigée vers le bas, de manière à éliminer en grande partie le risque de pénétration d'eau ou autre liquide dans le boîtier.

2. Système aérien de transmission électrique et optique selon la revendication 1, caractérisé en ce que les guides optiques connectés au niveau de la jonction sont des guides optiques de deux conducteurs électriques suspendus au pylône ou autre support.

3. Système aérien de transmission électrique et optique selon la revendication 1, caractérisé en ce qu'un des guides optiques connectés au niveau de la jonction est un guide optique de conducteur électrique aérien suspendu au pylône ou autre support et l'autre des guides optiques connectés au niveau de la jonction est un guide optique d'un câble (34) s'étendant jusqu'à une sous-station.

4. Système aérien de transmission électrique et optique selon la revendication 2 ou 3, caractérisé en ce que la paroi du boîtier à travers laquelle le ou les guides optiques passe ou passent dans le boîtier est en métal ou en alliage métallique conducteur de l'électricité.

5. Système aérien de transmission électrique et optique selon la revendication 4, caractérisé en ce que le conduit (25) à travers lequel le ou chaque guide optique pénètre dans le boîtier est en métal ou en alliage métallique, son extrémité intérieure étant un joint étanche aux fluides dans un trou de la paroi métallique du boîtier.

6. Système aérien de transmission électrique et optique selon l'une quelconque des revendications précédentes, caractérisé en ce que le boîtier a une forme très allongée et est monté de telle manière que son axe longitudinal soit vertical ou à peu près vertical.

7. Système aérien de transmission électrique et optique selon la revendication 6, dans lequel les guides optiques connectés au niveau de la jonction sont des guides optiques de deux conducteurs électriques aériens, caractérisé en ce que les guides optiques entrent côte-à-côte dans le boîtier à travers la paroi extrême inférieure du boîtier.

8. Système aérien de transmission électrique et optique selon la revendication 7, dans lequel un des guides optiques connectés au niveau de la jonction est le guide optique d'un câble s'étendant jusqu'à une sous-station, caractérisé en ce ledit guide optique entre dans le boîtier à travers la paroi d'extrémité inférieure du boîtier.

9. Système aérien de transmission électrique et optique selon l'une quelconque des revendications précédentes, caractérisé en ce que la ou chaque jonction de fibres optiques est suspendue à l'intérieur du boîtier et les extrémités en butée des fibres optiques sont jointes par un procédé de soudage par fusion.

10. Système aérien de transmission électrique et optique selon l'une quelconque des revendications 1 à 8, caractérisé en ce que la ou chaque jonction de fibres optiques est soutenue de manière rigide dans le boîtier et les extrémités des fibres optiques sont maintenues en butée entre elles par un moyen mécanique.

**Patentansprüche**

1. Elektrisches und optisches Freiluft-Übertragungssystem mit mindestens einem elektrischen Freiluftleiter (1, 2, 3), der mindestens einen optischen Wellenleiter (18) mit mindestens einer optischen Faser zur Übertragung von Licht aufweist und in großen Abständen zwischen beabstandeten Masten (5) oder anderen Stützen frei abgestützt ist, und mit einer optischen Wellenleiterverbindung, dadurch gekennzeichnet, daß jeder an der Verbindung verbundene optische Wellenleiter (18) in ein Gehäuse (21) durch eine von zwei Endwänden (22, 23) des Gehäuses führt, daß zumindest der sich zwischen seinen Endwänden erstreckende Teil des Gehäuses aus elektrisch isolierendem Material besteht und daß das Gehäuse oberhalb des Bodens am Mast (5) oder einer anderen Stütze befestigt ist, die optische Faserverbindung (30) oder Faserverbindungen aufnimmt und zumindest teilweise mit einem elektrisch isolierenden Medium im flüssigen oder halbflüssigen Zustand zum Umgeben der optischen Faserverbindung oder der optischen Faserverbindungen ausreichend gefüllt ist, wobei jeder optische Wellenleiter eine im wesentlichen flüssigkeitsdichte Abdichtung mit der Endwand des Gehäuses bildet oder in dieses durch ein Rohr (25) eintritt, dessen Eingangsende nach unten gerichtet ist, so daß die Gefahr, daß Wasser oder eine andere Flüssigkeit in das Gehäuse eindringen kann, im wesentlichen eliminiert ist.

2. Elektrisches und optisches Freiluft-Übertragungssystem nach Anspruch 1, dadurch gekennzeichnet, daß die an der Verbindung miteinander verbundenen optischen Wellenleiter solche von zwei elektrischen Freiluftleitern sind, die an dem Mast oder einer anderen Stütze aufgehängt sind.

3. Elektrisches und optisches Freiluft-Übertragungssystem nach Anspruch 1, dadurch gekennzeichnet, daß einer der an der Verbindung miteinander verbundenen optischen Wellenleiter ein solcher eines an dem Mast oder einer anderen Stütze aufgehängten elektrischen Freiluftleiters und der andere an der Verbindung miteinander verbundene optische Wellenleiter ein solcher eines sich zu einer Nebenstation erstreckenden Kabels (34) ist.

4. Elektrisches und optisches Freiluft-Übertragungssystem nach Anspruch 2 oder 3, dadurch gekennzeichnet, daß die Wand des Gehäuses, durch die der optische Wellenleiter oder die optischen Wellenleiter in das Gehäuse führen, aus einem elektrisch leitfähigen Metall oder einer Metallegierung besteht.

5. Elektrisches und optisches Freiluft-Übertragungssystem nach Anspruch 4, dadurch gekennzeichnet, daß das Rohr (25), durch das der oder jeder optische Wellenleiter in das Gehäuse führt, aud Metal oder einer Metallegierung besteht, wobei das innere Ende eine flüssigkeitsdichte Abdichtung in einer Bohrung in der Metallwand des Gehäuses ist.

6. Elektrisches und optisches Freiluft-Übertragungssystem nach einem der vorstehenden Ansprüche, dadurch gekennzeichnet, daß das Gehäuse im wesentlichen langgestreckt und so befestigt ist, daß seine Längsachse vertikal oder annähernd vertikal verläuft.

7. Elektrisches und optisches Freiluft-Übertragungssystem nach Anspruch 6, wobei die an der Verbindung miteinander verbundenen optischen Wellenleiter solche von zwei elektrischen Freiluftleitern sind, dadurch gekennzeichnet, daß die optischen Wellenleiter nebeneinander durch die obere Endwand des Gehäuses in dieses führen.

8. Elektrisches und optisches Freiluft-Übertragungssystem nach Anspruch 7, wobei ein an der Verbindung angeschlossener optischer Wellenleiter ein solcher eines sich zu einer Nebenstation erstreckenden Kabels ist, dadurch gekennzeichnet, daß der optische Wellenleiter in das Gehäuse durch dessen Bodenwandung führt.

9. Elektrisches und optisches Freiluft-Übertragungssystem nach einem der vorstehenden Ansprüche, dadurch gekennzeichnet, daß die oder jede optische Faserverbindung innerhalb des Gehäuses aufgehängt ist und daß die aneinanderliegenden Enden der optischen Fasern durch eine Schmelzverbindungstechnik miteinander verbunden sind.

10. Elektrisches und optisches Freiluft-Übertragungssystem nach einem der Ansprüche 1 bis 8, dadurch gekennzeichnet, daß die oder jede optische Faserverbindung innerhalb des Gehäuses starr befestigt ist und daß die Enden der optischen Fasern mittels mechanischer Einrichtungen aneinanderliegend gehalten werden.

Fig.1.

Fig.2.

Fig.3.